# EUROPEAN PATENT SPECIFICATION

(11) **EP 1 440 378 B1**
(45) Date of publication and mention of the grant of the patent: **03.10.2012**
(21) Application number: 02784395.2
(22) Date of filing: 04.11.2002
(51) Int. Cl.: G06F 13/40

(54) **IN-RUSH CURRENT CONTROLLER**
STEUERUNG FüR EINSCHALTSTRÖME
CONTROLEUR DE COURANT D'APPEL

(30) Priority: 02.11.2001 US 3078
(43) Date of publication of application: 28.07.2004
(73) Proprietor: Oracle America, Inc., Redwood City, CA 94065 (US)
(72) Inventor: SCHWARTZ, William, H., San Diego, CA 92129 (US)
(74) Representative: Harris, Ian Richard
(86) International application number: PCT/US2002/035432
(87) International publication number: WO 2003/040937

(56) References cited:
- EP-A- 1 041 491
- WO-A-01/82034
- JP-A- 2000 207 071
- US-A- 5 483 419
- US-A- 5 910 690
- US-A- 5 983 298

## Description

### BACKGROUND OF THE INVENTION

### 1. FIELD OF THE INVENTION

This invention relates generally to hot swappable electronic devices, and, more particularly, to a method and apparatus for controlling in-rush current in a system that supports hot swappable devices.

### 2: DESCRIPTION OF THE RELATED ART

The last several years have witnessed an increased demand for network computing. Businesses typically rely on network computing to maintain a competitive advantage over other businesses. As such, developers, when designing processor-based systems for use in network-centric environments, consider several factors to meet the expectation of the customers. The factors may include, for example, functionality, reliability, scalability, configurability and performance of such systems.

One example of a processor-based system used in a network-centric environment is a mid-range server system. A single mid-range server system may have a plurality of system boards and devices that may, for example, be configured as one or more system domains, where a system domain, for example, may act as a separate machine by running its own instance of an operating system to perform one or more of the configured tasks.

The benefits of providing substantially independently operating system domains within an integrated system become readily apparent as customers are able to perform a variety of tasks that would otherwise be reserved for several different machines. This independence is further enhanced by an ability to dynamically reconfigure the system. In the field of computer systems, hot swappable devices have become increasingly commonplace, particularly in server systems. That is, in a typical server system, a number of devices and/or printed circuit boards may be installed and/or removed from the server without powering down the server. A server that may be dynamically reconfigured by the addition of a device and/or a printed circuit board produces numerous advantages, particularly with respect to the server system's ability to remain powered up and doing useful work for its many users even while the reconfiguration process is ongoing.

Installing a device and/or a printed circuit board into an operating computer system, however, can, in some cases, be problematic. For example, if electrical signals, such as electrical power, are present and active when the device and/or printed circuit board are installed, undesirable arcing may occur and damage sensitive electronic components located thereon. Additionally, the electronic components may be subjected to substantial stress as relatively large currents are delivered to the newly added device.

US 5,983,298 describes a circuit card of an industrial controller that may be removed or inserted under power without loss of memory or disturbance to the power supplies of other modules through the use of a power failure signal derived from shortened pins on the connector between the card and the industrial controller. The power failure signal activates a timer delaying connection of the board components to power until the physical connection between the card and the industrial controller has stabilized. At this time current drain is ramped up by a controlling series FET. Upon removal of the card, the power failure signal causes outputs of an on-board microprocessor to be pulled to particular states necessary to prevent disturbance of a battery backed-up RAM and to eliminate current flow through protection diodes on other memory type devices attached to the microprocessor.

US 5,483,419 describes a docking module for removable disk drives. This document describes that in some embodiments it may be preferable to provide a power-up delay between the time power is applied to the drive and the time the bus is enabled, to allow the drive to spin up and reach a stable state before the bus is enabled. The document describes that this can be accomplished by using multi-sense pins on a connector. By using pins of three different lengths, with the power supply pins being longest, the bus pins being shorter, and the drive output pins the shortest, the power supply connection is made first, with the remaining connections being made at appropriate subsequent times.

The document US 5,910,690 discloses a system for controlling power application to an electronic component during a hotswap operation. A chassis contains a plurality of slots for interfacing with electronic components, each slot having an associated timing device. The electronic component contains a delay mechanism, such that when the electronic component interfaces with a slot in the chassis, the delay and timing mechanisms interact to create a slot timing circuit. The slot timing circuit interfaces to a ramp-up switching circuitry to produce a controlled application of power to remaining circuitry of the electronic component. The timing mechanism may be a resistor and the delay mechanism may be a capacitor, such that an RC circuit is formed which controls, in a time delayed fashion, a switching mechanism which in turn controls ramp-up of power application to the electronic component. Furthermore, each timing mechanism of each slot in the chassis may have a different timing value, such that power application to multiple electronic components, inserted simultaneously into the chassis, may have power applied in a staggered fashion, to prevent inrush and surge currents to the power supply. Still further, each switching mechanism of an electronic component may have an associated power control circuit, which when activated by the slot timing circuit, controls ramp-up of power application to remaining circuitry of the electronic component in a controlled fashion.

The document WO 01/82034 A discloses a PC card comprising a power-up circuit for controlling the power-up sequence of two sub-circuits of the PC card. The first sub-circuit is a processor sub-circuit for communicating with a PC, to which the PC card is attached. The second sub-circuit is a radio. When power is initially applied to the PC card, the radio sub-circuit initially draws a large amount of current. A delay circuit of the power-up circuit prevents current being taken by the processor sub-circuit, thereby ensuring that the total current taken by the PC card does not exceed a predetermined current level. After a predetermined time period, the current taken by the radio sub-circuit decays and current is allowed to be taken by the processor sub-circuit. By sequencing the power-up of the sub-circuits in this way, the total current taken by the PC card can be kept within the PCMCIA specified limits during the so-called power-up phase.

The document JP 2000 207071 A discloses an electronic device whereby, when a card detection unit of the electronic device detects that a PC card is mounted, an MPU sets an output signal Stime at one of the output ports from low level to high level after a predetermined length of time elapses following the detection. A switch drive circuit turns on a power supply switch when the signal Stime shifts to high level, and immediately turns off the power supply switch if it is detected that no PC card is mounted. As a result, the electric shock to the card-type electronic circuit can be minimized when mounting/dismounting the PC card in/from the electronic device.

### SUMMARY OF THE INVENTION

The invention is defined in the claims.

In one aspect a system is provided. The system comprises means for providing a first signal indicative of detecting insertion of a device into the system, and control means for receiving the first signal, the control means being adapted to block delivery of at least one electrical signal to the inserted device for a first preselected duration of time in response to receipt of the signal indicative that the device is inserted, the control means including a timer for timing the first preselected duration.

In another aspect a method is provided. The method comprises means of a system providing a first signal indicative of detecting insertion of a device in the system and control means of the system receiving the first signal and blocking delivery of at least one electrical signal to the inserted device for a first preselected duration of time in response to receipt of the signal indicative that the device is inserted, a timer of the control means timing the first preselected duration.

According to one embodiment of the instant invention, an apparatus is provided. The apparatus is comprised of a printed circuit board, a sensing circuit and a controller. The sensing circuit detects a device being electrically coupled to the printed circuit board and provides a first signal indicative thereof. The controller is associated with the printed circuit board and receives the first signal and blocks delivery of electrical power to the device for a first preselected duration of time.

### BRIEF DESCRIPTION OF THE DRAWINGS

The invention may be understood by reference to the following description taken in conjunction with the accompanying drawings, in which like reference numerals identify like elements, and in which:
Figure 1 shows a stylized block diagram of a system in accordance with one embodiment of the present invention;
Figure 2 illustrates a stylized block diagram of a portion of the system of Figure 1 responsible for controlling electrical power delivered to various devices and/or printed circuit boards in the system;
Figure 3 illustrates a stylized diagram of one embodiment of a system for producing a signal indicative of the presence of a board in the system of Figures 1 and 2;
Figure 4 illustrates a first embodiment of a stylized block diagram of a control logic and delay timer of Figure 2;
Figure 5 illustrates a second embodiment of a stylized block diagram of a control logic and delay timer of Figure 2; and
Figure 6 illustrates one embodiment of a stylized block diagram of an inrush controller of Figure 2.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but, on the contrary, the intention is to cover all modifications, equivalents, and alternatives falling within the scope of the claimed invention.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

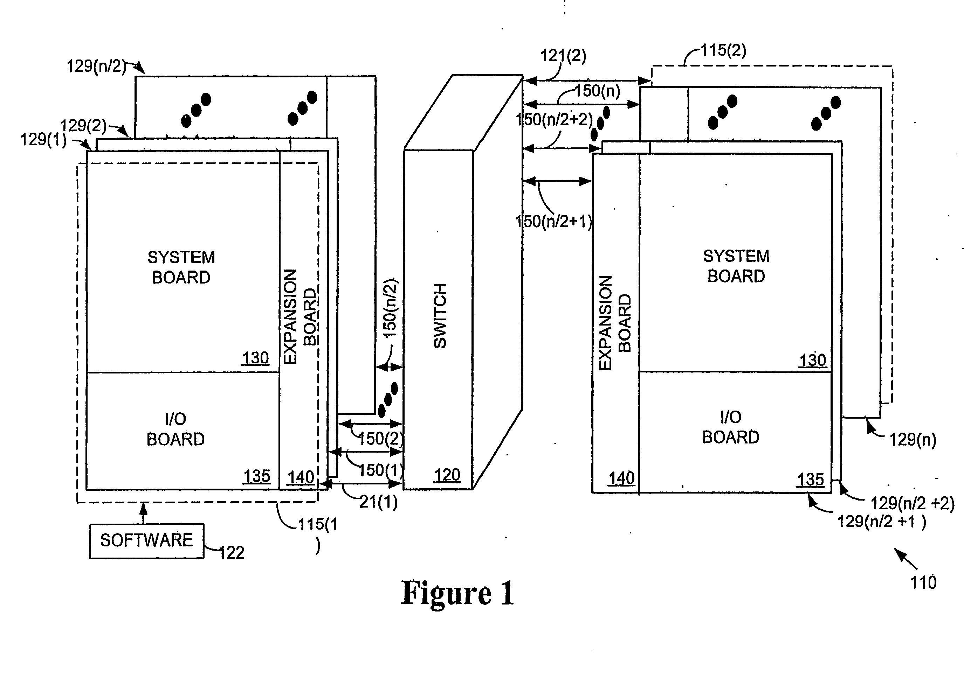

Referring now to Figure 1, a block diagram of a system 110 in accordance with one embodiment of the present invention is illustrated. The system 110, in one embodiment, includes a plurality of system control boards 115(1-2) that are coupled to a switch 120. For illustrative purposes, lines 121(1-2) are utilized to show that the system control boards 115 (12) are coupled to the switch 120, although it should be appreciated that, in other embodiments, the boards 115(1-2) may be coupled to the switch in any of a variety of ways, including by edge connectors, cables, or other available interfaces.

The system 110 includes a plurality of system board sets 129(1-n) that are coupled to the switch 120, as indicated by lines 150(1-n). The system board sets 129(1-n) may be coupled to the switch 120 in one of several ways, including edge connectors or other available interfaces. The switch 120 may serve as a communications conduit for the plurality of system board sets 129(1-n), half of which may be connected on one side of the switch 120 and the other half on the opposite side of the switch 120.

The switch 120, in one embodiment, may be a 18xI8 crossbar switch that allows system board sets 129(1-n) and system control boards 115(1-2) to communicate, if desired. Thus, the switch 120 may allow the two system control boards 115(1-2) to communicate with each other or with other system board sets 129(1-n), as well as allow the system board sets 129(1-n) to communicate with each other.

The system board sets 129(1-n), in one embodiment, comprise one or more boards, including a system board 130, I/0 board 135, and expansion board 140. The system board 130 may include processors, as well as memories, for executing, in one embodiment, applications, including portions of an operating system. The I/O board 135 may manage I/O cards, such as peripheral component interface cards and optical cards that are installed in the system 110. The expander board 140, in one embodiment, generally acts as a multiplexer (e.g., 2:1 multiplexer) to allow both the system and I/O boards 130, 135 to interface with the switch 120, which, in some instances, may have only one slot for interfacing with both boards 130, 135.

The system 110 may be configured in any of a wide variety of schemes. That is, the number of board sets 129(1-n) that are included in the system 110 may vary widely, falling somewhere in the range of 1-18 in the illustrated embodiment. Further, partial board set may also be present in the system 110. For example, the board set 129(1) may be comprised of only the I/O board 135 or only the system board 130. Moreover, the configuration may be altered while the system 110 is operating, as the system 110 is configured to allow the I/O boards 135 and/or the system boards 130 to be hot swapped. That is, various I/O boards 135 and/or system boards 130 may be added to or removed from the system 110 while the system 110 is operating.

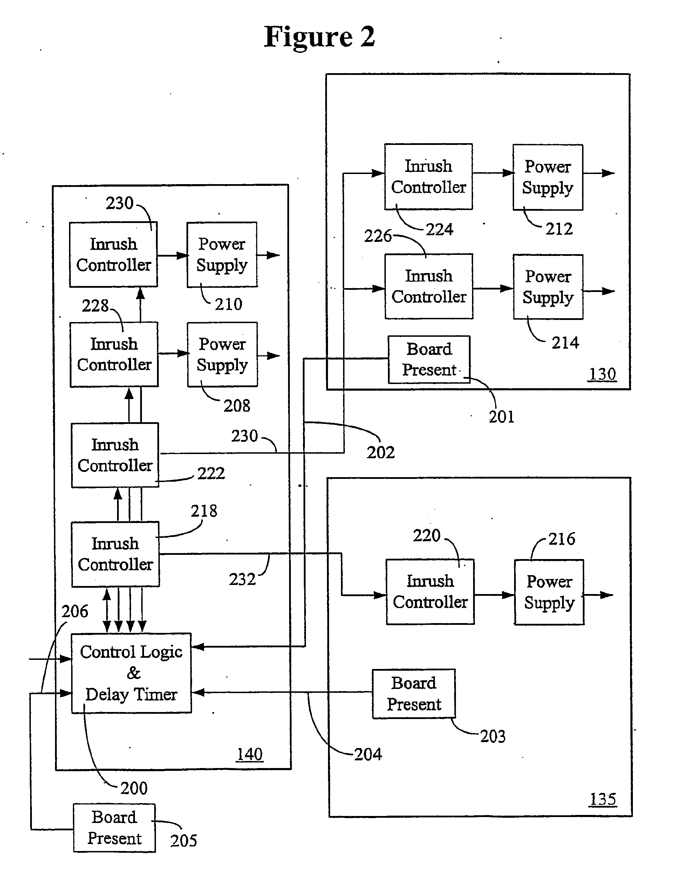

Turning now to Figure 2, to reduce the likelihood of damage to the I/O boards 135 and/or the system boards 130 during hot swapping, a control logic and delay timer 200 is included to manage the delivery of electrical power to the I/O boards 135 and/or the system boards 130. Additionally, the control logic and delay timer 200 may also be configured to control delivery of electrical power to the expander board 140, as it is also hot swappable. In the illustrated embodiment, the control logic and delay timer 200 is physically located on the expander board 140; however, its physical location may be varied without departing from the scope of the instant invention. For example, the control logic and delay timer 200 may also be physically located on the switch 120 or the system control boards 115(1-2).

Generally, the control logic and delay timer 200 receives signals indicative of the presence of the system board 130, the I/O board 135, and the expander board 140 from board present circuitry 201, 203, 205 over lines 202, 204, 206, respectively. In response to detecting the presence of one of the boards 130, 135, 140, the control logic and delay timer 200 delivers a signal causing electrical power (e.g., 48V) to be delivered to the newly inserted board after a preselected duration of time (e.g., 7 seconds). System voltage is delivered over lines 230, 232 to the boards 130, 135, respectively. Additionally, the control logic and delay timer 200 may also control delivery of current to these boards 130, 135, 140. For example, the control logic and delay timer 200 may cause level of current delivered to the boards 130, 135 to be ramped up to its desired level over a preselected period of time.

The control logic and delay timer 200 is coupled to and controls a plurality of power supplies 208, 210, 212, 214, 216 through a plurality of inrush controllers 218, 220, 222, 224, 226, 228, 230. The power supplies 208, 210, 212, 214, 216 are configured to provide electrical power to various portions of the system 110, such as the boards 130, 135, 140. Additionally, the power supplies 208, 210, 212, 214, 216 may also be responsible for delivering a variety of voltage levels to select portions of the system 110, as needed. In the illustrated exemplary embodiment, the power supplies 208, 210, 212, 214, 216 are responsible for delivering a supply voltage of about 48V to the boards 130, 135, 140. Generally, the control logic and delay timer 200 provides control signals to the inrush controllers 218, 220, 222, 224, 226, 228, 230, which respond to the control signals by delivering the supply voltage to their respective power supplies 208, 210, 212, 214, 216.

Generally, while a plurality of inrush controllers 218, 220, 222, 224, 226, 228, 230 and power supplies 208, 210, 212, 214, 216 are shown, they are substantially similar in configuration. Thus, only one exemplary inrush controller and power supply will be discussed in detail herein so as to avoid unnecessarily obscuring the instant invention. Similarly, the board present circuits, 201, 203, 205 are substantially similar in configuration to one another, and thus only one exemplary board present circuit will be discussed in detail herein so as to avoid unnecessarily obscuring the instant invention.

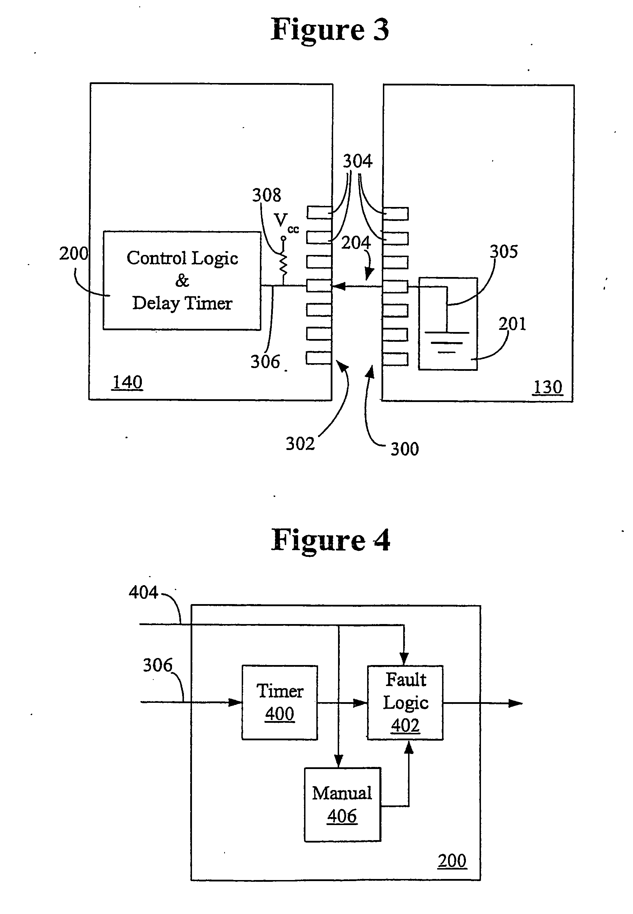

An exemplary configuration for producing and delivering the board present signal is illustrated in Figure 3. The boards 130, 140 each respectively include a conventional edge connector 300, 302 with a plurality of electrically conductive pads 304 positioned thereon. The board present circuit 201 on the board 130 is comprised of an electrically conductive line 305, such as a lead line, wire, trace, etc. coupled between one of the pads 304 on the edge connector 300 and electrical ground. A corresponding pad 304 on the edge connector 300 of the board 140 is coupled through an electrically conductive line 306, such as a lead line, wire, trace, etc. to an input terminal of the control logic and delay timer 200. A pull-up resistor 308 is coupled between the line 306 and a voltage supply V_{cc}. When the board 130 is installed in the system 110, the pads 304 are electrically coupled together via a conventional edge connector stylistically represented by the line 204.

Thus, when the board 130 is not installed in the system 110, the pull-up resistor 308 places a voltage level of about V_{cc} onto the line 306, insuring that a logically high signal is delivered to the control logic and delay timer 200. On the other hand, when the board 130 is installed in the system 110, the line 306 is coupled through the line 204 and lead 305 to electrical ground, insuring that a logically low signal is delivered to the control logic and delay timer 200. This logically low signal serves as an indication to the control logic and delay timer 200 that the board 130 has been installed in the system 110.

Turning now to Figure 4, a block diagram of one embodiment of the control logic and delay timer 200 that is capable of performing at least some of the functions attributed to the control logic and delay timer 200 is illustrated. Generally, the control logic and delay timer 200 includes a timer 400 configured to receive the board present signal over the line 306. The timer 400 begins timing a preselected delay (e.g., 7 seconds) in response to receiving the logically low signal over the lead 306, indicating that the board 130 has been inserted into the system 110. After the preselected delay has expired, the timer 400 delivers a signal indicating that electrical power may now be delivered to the newly inserted board 130. If, however, the system 110 has detected a fault such that powering up the newly inserted board 130 may not be advisable, fault logic 402 will intercept the signal from the timer 400 and block the signal to prevent electrical power from being supplied to the newly inserted board 130. The fault logic 402 may be activated by any of a variety of fault conditions, such as a component failure, which may include a decoupling capacitor shorting out. Similarly, failure of a transistor or transformer in the input circuitry of a dc to dc power supply may cause the fault logic to block the signal to prevent electrical power from being supplied to the newly inserted board 130. Detection of the fault may be communicated to the fault logic 402 over a conventional communications link 404, such as a link using 1₂C protocol.

The communications link 404 may also be coupled to a manual operation circuit 406. The manual operation circuit 406 may be used to override the fault logic 402 to provide electrical power to the board 130 despite the presence of an otherwise disabling fault. For example, an operator may use a console (not shown) coupled to the system control board 115(1) to enter commands that are communicated over the communications link 404 to the manual operation circuit 406. In this manner, an operator may at least temporarily override a fault condition, or the operator may manually reset the fault logic 402 after the condition has been cured so that the board 130 may be powered up.

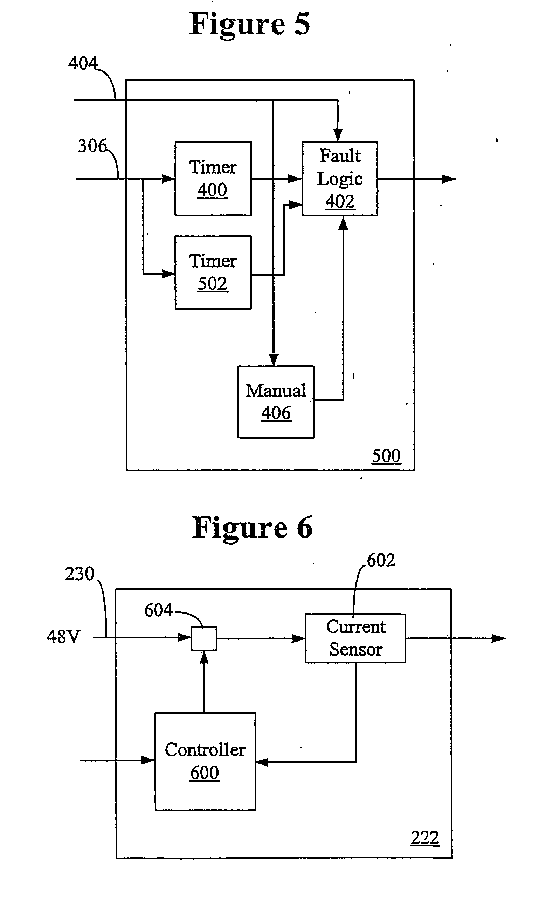

Turning now to Figure 5, a block diagram of an alternative embodiment of a control logic and delay timer 500 that is capable of performing at least some of the functions attributed to the control logic and delay timer 500 is illustrated. Generally, the control logic and delay timer 500 operates substantially similar to the control logic and delay timer 200 discussed above, but differs primarily by the presence of a second timer 502, which, like the timer 400, is also configured to receive the board present signal over the line 306 and, after a preselected delay, produce a signal indicating that power should be delivered to the newly added board. The second timer 502 may be used to control delivery of a second supply voltage to the newly inserted board, or at least to introduce the supply voltage at a different time relative to the first timer 400. For example, the first timer 400 may be configured to control delivery of a supply voltage that is used to power a first portion of the components located on the newly added board, whereas the second timer 502 may be configured to control delivery of a supply voltage to a second portion of the components located on the newly added board. In some systems, it may be useful to allow a first portion of the circuitry located on the newly inserted board to begin operation before a second portion of the circuitry. For example, in one embodiment it has been useful to allow electrical power to be delivered to power management circuitry after a first, shorter preselected duration of time (e.g., 5 seconds), and to allow electrical power to be delivered to power management circuitry after a second, longer preselected duration of time (e.g., 7 seconds).

While the timers 400, 502 are illustrated as being separate devices, those skilled in the art will appreciate that the timers 400, 502 could be implemented in a single device. For example, if the timer is implemented using a counter, separate output terminals of the counter will produce a signal at different relative times.

Turning now to Figure 6, a block diagram of one embodiment of the inrush controller 222 is illustrated. Generally, the inrush controller 222 monitors current flowing to the board 130 and, at least initially, limits the rate at which the current is allowed to increase. The inrush current controller 222 includes a current sensor 602, which may take the form of a resistor, a hall effect device, or the like. A controllable element 604, such as a transistor, thyristor, or the like, is positioned in the line 230 to controllably block current from flowing therethrough. That is, a controller 600 receives a signal from the control logic and delay timer 200, indicating that the desired period of time has expired since the board 130 was inserted into the system. The controller 600 responds to this signal by enabling the control element 604 to begin passing current to the board 130.

The current flowing to the board 130 passes through the current sensor 602, which delivers a signal indicative of the magnitude of the current to the controller 600. The controller 600 analyzes the magnitude of the sensed current and then adjusts the level of energization being delivered to the controllable element 604 so as to modify the magnitude of the current passed to the board 130. Those skilled in the art will appreciate that the process of adjusting the level of energization of the controllable element may be accomplished in a variety of ways, such as pulse width modulation, varying the duty cycle, varying the voltage level of the excitation signal, and the like.

Using this feedback arrangement, the inrush controller 222 may reduce the occurrence of sudden, large currents being delivered to the newly added board 130. In one embodiment, the controller 600 allows the magnitude of the current being delivered to the board 130 to ramp up over time. For example, the current is allowed to linearly ramp from 0A to 10A at a rate of about 1A/10 microsecond.

In the embodiment illustrated in Figure 2, the board 130 is illustrated with its two inrush controllers 224 connected to the output of the inrush controller 222. Thus, the inrush controller 222 operates as described above to prevent arcing and sudden, large inrush currents when the board 130 is inserted in the system 110. The inrush controllers 224, 226 are useful in applications where multiple relatively independent systems are present on the board 130, or where redundant power supplies are present. For example, on the board 130 the two power supplies 212, 214 may be coupled in parallel to provide redundant sources of power to the components located thereon. If one of the power supplies 212, 214 fails, its corresponding inrush controller 224, 226 may shut down the failing power supply, but the board 130 may continue to operate using the remaining power supply. Similarly, where the power supplies 212, 214 are providing power to relatively independent portions of circuitry on the board 130, a failing power supply may be detected and shut down. The associated circuitry will also be shut down. The other power supply continues to deliver power to the remaining portion of the circuitry, allowing it to continue with normal operation, or, in some cases, to take over at least some of the functions previously performed by some of the now disabled circuitry. In either case, the board 130 can "ride out" the failure without interrupting the operation of the system 110.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the claimed invention. Accordingly, the protection sought herein is as set forth in the claims below.

## Claims

1. A system (110), comprising:
means (308) for providing a first signal indicative of detecting insertion of a device (130, 135) into the system; and
control means (200) for receiving the first signal, the control means being adapted to block delivery of at least one electrical signal to the inserted device for a first preselected duration of time in response to receipt of the first signal indicative that the device is inserted, the control means including a timer (400) for timing the first preselected duration; **characterised by**
a controller (222, 600) comprising a current sensor (602) and a controllable element (604), the controller, in response to receiving from the control means a signal indicating that the first preselected duration of time has expired, being operable to limit the rate at which the current of a first electrical signal is allowed to increase.

2. The system of claim 1, wherein the control means comprises means for prevent delivery of electrical power to the inserted device for the first preselected duration of time.

3. The system of claim 2, wherein the control means comprises means for passing at least a portion of the electrical power to the inserted device after the first preselected duration of time.

4. The system of any preceding claim, wherein the controller comprises means for progressively increasing the level of current delivered to the inserted device after the first preselected duration of time.

5. The system of any preceding claim, wherein the control means comprises means for blocking the first electrical signal from being delivered to a first portion of the inserted device for the first preselected duration of time, and for blocking a second electrical signal from being delivered to a second portion of the inserted device for a second preselected duration of time, wherein the second preselected duration of time is greater than the first preselected duration of time.

6. The system of claim 5, wherein the control means comprises means for blocking electrical power from being delivered to the first portion of the inserted device for the first preselected duration of time, and for blocking electrical power from being delivered to the second portion of the inserted device for the second preselected duration of time.

7. The system of any preceding claim wherein the means for providing a first signal comprises a sensor adapted to detect insertion of a hot swappable device into the system and wherein the control means is adapted to block delivery of system voltage to the hot swappable device for the first preselected duration of time.

8. The system of any preceding claim comprising a printed circuit board, wherein the means for providing a first signal comprises a sensing circuit adapted to detect electrically coupling of the device to the printed circuit board and to provide the first signal indicative thereof, and wherein the control means is associated with the printed circuit board, the controller being adapted to receive the first signal and to block delivery of electrical power to the device for the first preselected duration of time.

9. The system of claim 8, wherein the printed circuit board has a connector adapted to receive the device therein, wherein the means for providing a first signal comprises a sensing circuit is adapted to detect coupling of the device to the connector and to provide the first signal indicative thereof.

10. A method, comprising:
providing, by means (308) of a system, a first signal indicative of detecting insertion of a device (130, 135) in the system (110);
receiving, by control means (200) of the system, the first signal and blocking delivery of at least one electrical signal to the inserted device for a first preselected duration of time in response to receipt of the signal indicative that the device is inserted, a timer (400) of the control means timing the first preselected duration; **characterised by** in response to receiving a signal from the control means indicating that the first preselected duration of time has expired, limiting, by a controller (222, 600) comprising a current sensor (602) and a controllable element (604), the rate at which the current of a first electrical signal is allowed to increase.

11. The method of claim 10, wherein blocking delivery of an electrical signal comprises preventing delivery of electrical power to the inserted device for the first preselected duration of time.

12. The method of claim 11, wherein blocking delivery of the first electrical signal comprises passing at least a portion of the electrical power to the inserted device after the first preselected duration of time.

13. The method of any of claims 10 to 12, wherein limiting the rate at which the current of the first electrical signal is bellowed to increase comprises progressively increasing a level of current delivered to the inserted device after the first preselected duration of time.

14. The method of any of claims 10 to 13, comprising blocking delivery of the first electrical signal to a first portion of the inserted device for the first preselected duration of time, and blocking delivery of a second electrical signal to a second portion of the inserted device for a second preselected duration of time, wherein the second preselected duration of time is greater than the first preselected duration of time.

15. The method of claim 14, comprising blocking electrical power from being delivered to the first portion of the inserted device for the first preselected duration of time, and blocking electrical power from being delivered to the second portion of the inserted device for the second preselected duration of time.

## Patentansprüche

1. System (110), umfassend:
Mittel (308) zum Liefern eines ersten Signals, das die Erkennung des Einbaus einer Einrichtung (130, 135) in das System anzeigt, und
ein Steuermittel (200) zum Empfangen des ersten Signals, wobei das Steuermittel angepasst ist, die Abgabe von mindestens einem elektrischen Signal an die eingebaute Einrichtung für eine erste voreingestellte Zeitdauer als Reaktion auf den Empfang des ersten Signals, das anzeigt, dass die Einrichtung eingebaut ist, zu blockieren, wobei das Steuermittel einen Timer (400) zum Messen der ersten voreingestellten Dauer enthält, **gekennzeichnet durch**
eine Steuerung (222, 600), die einen Stromsensor (602) und ein steuerbares Element (604) umfasst, wobei die Steuerung, als Reaktion auf den Empfang eines Signals von dem Steuermittel, das anzeigt, dass die erste voreingestellte Zeitdauer abgelaufen ist, funktionsfähig ist, die Geschwindigkeit, mit der der Strom eines ersten elektrischen Signals ansteigen darf, zu begrenzen.

2. System nach Anspruch 1, wobei das Steuermittel Mittel umfasst, um die Abgabe von elektrischem Strom an die eingebaute Einrichtung für die erste voreingestellte Zeitdauer zu verhindern.

3. System nach Anspruch 2, wobei das Steuermittel Mittel umfasst, um nach der ersten voreingestellten Zeitdauer mindestens einen Teil des elektrischen Stroms an die eingebaute Einrichtung zu leiten.

4. System nach einem vorhergehenden Anspruch, wobei die Steuerung Mittel zum schrittweisen Erhöhen des Pegels des Stroms, der an die eingebaute Einrichtung abgegeben wird, nach der ersten voreingestellten Zeitdauer umfasst.

5. System nach einem vorhergehenden Anspruch, wobei das Steuermittel Mittel umfasst, um die Abgabe des ersten elektrischen Signals an einen ersten Abschnitt der eingebauten Einrichtung für die erste voreingestellte Zeitdauer zu blockieren und um die Abgabe eines zweiten elektrischen Signals an einen zweiten Abschnitt der eingebauten Einrichtung für eine zweite voreingestellte Zeitdauer zu blockieren, wobei die zweite voreingestellte Zeitdauer länger ist als die erste voreingestellte Zeitdauer.

6. System nach Anspruch 5, wobei das Steuermittel Mittel umfasst, um die Abgabe von elektrischem Strom an den ersten Abschnitt der eingebauten Einrichtung für die erste voreingestellte Zeitdauer zu blockieren und um die Abgabe von elektrischem Strom an den zweiten Abschnitt der eingebauten Einrichtung für die zweite voreingestellte Zeitdauer zu blockieren.

7. System nach einem vorhergehenden Anspruch, wobei das Mittel zum Abgeben eines ersten Signals einen Sensor umfasst, der angepasst ist, den Einbau einer im laufenden Betrieb auswechselbaren Hot-Swap-Einrichtung in das System zu erkennen und wobei das Steuermittel angepasst ist, die Abgabe von Systemspannung an die im laufenden Betrieb auswechselbare Hot-Swap-Einrichtung für die erste voreingestellte Zeitdauer zu blockieren.

8. System nach einem vorhergehenden Anspruch, das eine Platine umfasst, wobei das Mittel zum Liefern eines ersten Signals eine Erfassungsschaltung umfasst, die angepasst ist, die elektrische Verbindung der Einrichtung mit der Platine zu erkennen und das erste Signal, das dies anzeigt, zu liefern, und wobei das Steuermittel der Platine zugehörig ist, wobei die Steuerung angepasst ist, das erste Signal zu empfangen und die Abgabe von elektrischen Strom an die Einrichtung für die erste voreingestellte Zeitdauer zu blockieren.

9. System nach Anspruch 8, wobei die Platine ein Anschlussteil aufweist, das angepasst ist, die Einrichtung darin aufzunehmen, wobei das Mittel zum Liefern eines ersten Signals eine Erfassungsschaltung umfasst, die angepasst ist, die Verbindung der Einrichtung mit dem Anschlussteil zu erkennen und das erste Signal, das dies anzeigt, zu liefern.

10. Verfahren, umfassend:
Liefern, durch Mittel (308) eines Systems, eines ersten Signals, das das Einbauen einer Einrichtung (130, 135) in das System (110) anzeigt,
Empfangen, durch Steuermittel (200) des Systems, des ersten Signals und Blockieren der Abgabe von mindestens einem elektrischen Signal an die eingebaute Einrichtung für eine erste voreingestellte Zeitdauer als Reaktion auf den Empfang des Signals, das anzeigt, dass die Einrichtung eingebaut ist, wobei ein Timer (400) des Steuermittels die erste voreingestellte Dauer misst, **gekennzeichnet durch**, als Reaktion auf den Empfang eines Signals von dem Steuermittel, das anzeigt, dass die erste voreingestellte Zeitdauer abgelaufen ist, das Begrenzen, **durch** eine Steuerung (222, 600), die einen Stromsensor (602) und ein steuerbares Element (604) umfasst, der Geschwindigkeit, mit der der Strom eines ersten elektrischen Signals ansteigen darf.

11. Verfahren nach Anspruch 10, wobei das Blockieren der Abgabe eines elektrischen Signals das Verhindern der Abgabe von elektrischem Strom an die eingebaute Einrichtung für die erste voreingestellte Zeitdauer umfasst.

12. Verfahren nach Anspruch 11, wobei das Blockieren der Abgabe des ersten elektrischen Signals das Leiten von mindestens einem Teil des elektrischen Stroms an die eingebaute Einrichtung nach der ersten voreingestellten Zeitdauer umfasst.

13. Verfahren nach einem der Ansprüche 10 bis 12, wobei das Begrenzen der Geschwindigkeit, mit der der Strom des ersten elektrischen Signals ansteigen darf, das schrittweise Erhöhen eines Pegels des Stroms, der an die eingebaute Einrichtung abgegeben wird, nach der ersten voreingestellten Zeitdauer umfasst.

14. Verfahren nach einem der Ansprüche 10 bis 13, das das Blockieren der Abgabe des ersten elektrischen Signals an einen ersten Abschnitt der eingebauten Einrichtung für die erste voreingestellte Zeitdauer umfasst und das Blockieren der Abgabe eines zweiten elektrischen Signals an einen zweiten Abschnitt der eingebauten Einrichtung für eine zweite voreingestellte Zeitdauer, wobei die zweite voreingestellte Zeitdauer länger ist als die erste voreingestellte Zeitdauer.

15. Verfahren nach Anspruch 14, das das Blockieren der Abgabe von elektrischem Strom an den ersten Abschnitt der eingebauten Einrichtung für die erste voreingestellte Zeitdauer umfasst und das Blockieren der Abgabe von elektrischem Strom an den zweiten Abschnitt der eingebauten Einrichtung für die zweite voreingestellte Zeitdauer.

## Revendications

1. Système (110), comprenant :
un moyen (308) pour délivrer un premier signal indiquant la détection de l'insertion d'un dispositif (130, 135) dans le système ; et
un moyen de commande (200) pour recevoir le premier signal, le moyen de commande étant adapté pour bloquer l'émission d'au moins un signal électrique vers le dispositif inséré pendant une première durée présélectionnée en réponse à la réception du premier signal indiquant que le dispositif est inséré, le moyen de commande comprenant un temporisateur (400) pour régler la première durée présélectionnée ; **caractérisé par**
un dispositif de commande (222, 600) comprenant un capteur de courant (602) et un élément commandable (604), le dispositif de commande, en réponse à la réception à partir du moyen de commande d'un signal indiquant que la première durée présélectionnée a expiré, permettant de limiter la vitesse à laquelle le courant d'un premier signal électrique peut augmenter.

2. Système selon la revendication 1, dans lequel le moyen de commande comprend un moyen pour empêcher la distribution d'énergie électrique au dispositif inséré pendant la première durée présélectionnée.

3. Système selon la revendication 2, dans lequel le moyen de commande comprend un moyen pour transférer au moins une partie de l'énergie électrique vers le dispositif inséré après la première durée présélectionnée.

4. Système selon l'une quelconque des revendications précédentes, dans lequel le dispositif de commande comprend un moyen pour augmenter progressivement le niveau de courant distribué au dispositif inséré après la première durée présélectionnée.

5. Système selon l'une quelconque des revendications précédentes, dans lequel le moyen de commande comprend un moyen pour bloquer la délivrance du premier signal électrique à une première partie du dispositif inséré pendant la première durée présélectionnée, et pour bloquer la délivrance d'un deuxième signal électrique à une deuxième partie du dispositif inséré pendant une deuxième durée présélectionnée, dans lequel la deuxième durée présélectionnée est plus longue que la première durée présélectionnée.

6. Système selon la revendication 5, dans lequel le moyen de commande comprend un moyen pour bloquer la délivrance de l'énergie électrique à la première partie du dispositif inséré pendant la première durée présélectionnée, et pour bloquer la distribution de l'énergie électrique à la deuxième partie du dispositif inséré pendant la deuxième durée présélectionnée.

7. Système selon l'une quelconque des revendications précédentes, dans lequel le moyen pour délivrer un premier signal comprend un capteur adapté pour détecter l'insertion d'un dispositif remplaçable à chaud dans le système et dans lequel le moyen de commande est adapté pour bloquer la distribution de tension du système au dispositif remplaçable à chaud pendant la première durée présélectionnée.

8. Système selon l'une quelconque des revendications précédentes comprenant une carte de circuit imprimé, dans lequel le moyen pour délivrer un premier signal comprend un circuit de détection adapté pour détecter un couplage électrique du dispositif avec la carte de circuit imprimé et pour délivrer le premier signal indiquant celui-ci, et dans lequel le moyen de commande est associé à la carte de circuit imprimé, le dispositif de commande étant adapté pour recevoir le premier signal et pour bloquer la distribution d'énergie électrique au dispositif pendant la première durée présélectionnée.

9. Système selon la revendication 8, dans lequel la carte de circuit imprimé présente un connecteur adapté pour y recevoir le dispositif, dans lequel le moyen pour délivrer un premier signal comprend un circuit de détection adapté pour détecter un couplage du dispositif avec le connecteur et pour délivrer le premier signal indiquant celui-ci.

10. Procédé, comprenant :
la délivrance, au moyen (308) d'un système, d'un premier signal indiquant la détection de l'insertion d'un dispositif (130, 135) dans le système (110) ;
la réception, par le biais du moyen de commande (200) du système, du premier signal et le blocage de l'émission d'au moins un signal électrique vers le dispositif inséré pendant une première durée présélectionnée en réponse à la réception du signal indiquant que le dispositif est inséré, un temporisateur (400) du moyen de commande réglant la première durée présélectionnée ; **caractérisé par**
en réponse à la réception d'un signal provenant du moyen de commande indiquant que la première durée présélectionnée a expiré, la limitation, par un dispositif de commande (22, 600) comprenant un capteur de courant (602) et un élément commandable (604), de la vitesse à laquelle le courant d'un premier signal électrique peut augmenter.

11. Procédé selon la revendication 10, dans lequel le blocage de l'émission d'un signal électrique consiste à empêcher la distribution d'énergie électrique au dispositif inséré pendant la première durée présélectionnée.

12. Procédé selon la revendication 11, dans lequel le blocage de l'émission du premier signal électrique comprend le transfert d'au moins une partie de l'énergie électrique vers le dispositif inséré après la première durée présélectionnée.

13. Procédé selon l'une quelconque des revendications 10 à 12, dans lequel la limitation de la vitesse à laquelle le courant du premier signal électrique peut augmenter comprend l'augmentation progressive d'un niveau de courant distribué au dispositif inséré après la première durée présélectionnée.

14. Procédé selon l'une quelconque des revendications 10 à 13, comprenant le blocage de l'émission du premier signal électrique vers une première partie du dispositif inséré pendant la première durée présélectionnée, et le blocage de l'émission d'un deuxième signal électrique vers une deuxième partie du dispositif inséré pendant une deuxième durée présélectionnée, dans lequel la deuxième durée présélectionnée est plus longue que la première durée présélectionnée.

15. Procédé selon la revendication 14, consistant à bloquer la distribution de l'énergie électrique à la première partie du dispositif inséré pendant la première durée présélectionnée, et à bloquer la distribution de l'énergie électrique à la deuxième partie du dispositif inséré pendant la deuxième durée présélectionnée.
